# EUROPEAN PATENT APPLICATION

(11) **EP 4 201 584 A1**
(43) Date of publication of application: **28.06.2023**
(21) Application number: 21461639.3
(22) Date of filing: 23.12.2021
(51) Int. Cl.: B23Q 3/06, B25B 5/00, B25B 5/12, B25B 5/16

(54) **MACHINING CHUCK FOR A MEASURING AND MACHINING STATION, ESPECIALLY FOR METAL CASTS**

(71) Applicant: Odlewnia Kutno spolka z ograniczona odpowiedzialnoscia, 43-170 Laziska Gorne (PL)
(72) Inventor: Ciechanowicz, Krzysztof, Ropczyce (PL); Szybicki, Dariusz, Nosówka (PL); Kurc, Krzysztof, Nosówka (PL); Burghardt, Andrzej, Rzeszów (PL); Gierlak, Piotr, Nowa Wie (PL); Muszy ska, Magdalena, Rzeszów (PL); Jach, Dariusz, B dzin (PL); Kwiatkowski, Michal, Kraków (PL); Nowosielski, Maciej, Kraków (PL)
(74) Representative: Górska, Anna

(57) **Abstract**

Machining chuck of a measuring and machining station especially for metal casts such that it has a tabletop (A) with two clamping mechanisms (B1, B2) arranged laterally relative to the tabletop (A) and opposingly, each of which has a retaining means (1', 1") with an extensible mandrel (2, 8) and a drive mechanism (3', 3"), and at the free end of each mandrel (2, 8) a front jaw (6, 11) having a profile matching the profile of the outer wall of the cast to be retained, and at least one clamping mechanism (B1, B2) having a front ball means (5, 10) with a socket outgoing in the wall of the front jaw (6, 11).

## Description

The invention relates to a machining chuck for a measuring and machining station especially for metal casts, adapted for positioning and mounting for subsequent testing and machining of large-size cast as well as turned or forged metal products, especially products with a cylindrical or similar shape.

Production processes of cast metal products often involve said products being defective in that they have overfills, flush and burrs, which are removed from the casts by breaking them off or by cutting them off using band saws, cutters or an oxyacetylene welding torch, while the remaining irregularities are removed with pneumatic hammers, grinding wheels and other tools for deburring, grinding or stripping. Such machining should make the edges of the pieces even and sharp or chamfered, to match the specific requirements. Such machining processes are not easily subject to robotisation, since an automatic device, e.g. a robotic arm with a grinding tool, moves to pre-programmed positions, and product defects may have different values within their pre-determined dimensional tolerances, and, in the case of large pieces, the dimensional tolerances of pieces may have values greater than the size of the burr. In this situation, , where there is a large negative limit deviation , the machining tool may be activated outside the burr, and where there is a large positive limit deviation, the machining tool may contact a non-defective area of the workpiece. This problem also affects the production of metal pieces using methods other than casting, such as drilling, grinding, milling, cutting or stamping, which can also generate burrs. The different types of machining, as well as the materials from which the pieces are made, produce defects of great variety; they vary in terms of size, up to several tens of millimetres, in shape and thickness, as well as brittleness. These characteristics of product defects should be taken into account in each specific case of machining robotisation, especially with regard to the selection of the cutting tool, its shape and material, as well as the technological parameters of machining, wherein the conditions for machining products even within a single batch may vary in particular due to the tool being worn in the course of previous machining processes. The handling of parts may vary depending on the tolerance classes according to ISO 286-1, ISO 2768-1 and others, the size of the part to be machined, the complexity of its shape, as well as the dimensions and shapes of overflows, flash and burrs.

The correct and proper course of the process of automatic product machining depends on various characteristics thereof, such as in particular the selection of cutting tools and their drives, the configuration of supply rooms and tools in relation to each other and to the robotic device, the parameters of tool movements, as well as fixing thereof relative to the workpiece, with the characteristics of construction and the manner of movement of the moving parts of the robotic device being considered critical. The device must ensure repeatable reproduction of complex shapes of objects by performing movements with sufficiently high accuracy, required by the assumed quality of the product, which involves the issue of smoothness and speed of movement, the issue of optimisation of the movement path, or elimination of vibrations of the robotic arm. The design of the robotic device must ensure that its individual movements are performed at precisely controlled speeds over a wide range of speed limits, including fast auxiliary movements and slow precision machining movements, resulting in a shortened production cycle. Programmable speeds of particular operations allows them to be appropriately selected for each one; the device control system must be capable of quickly compensating for the variable loads that occur when removing burrs that vary in size. Programming of the device should ensure that commands are executed as quickly and efficiently as possible, including easy change of both workpiece contour and speed of individual movements performed by the device.

Devices and methods for diagnosing the condition of products need to be implemented to achieve a sufficient degree of precision in the machining process of said products in order to determine the extent of the machining required and the manner of performing it, both before and during the machining process. In order to carry out machining and product condition diagnosis, it is necessary to very accurately position and mount the product in the robotic device and to ensure compensation of vibrations to which the product would be subjected during machining, assuming that the product then remains mostly stationary, while the machining process is carried out by a mobile robotic arm. Machining chucks are used for this purpose, which usually take the form of work platforms comprising positioning and mounting means adapted to the shapes of the workpieces.

Patent EP 2821872 discloses an automated workstation for machining large-sized parts having at least one curved surface, which includes an arm robot mounted on a base having at least six degrees of freedom equipped with a grinding head and a scanning system configured to control the shape of the part to be deburred and to determine its position. The station includes a workbench having a horizontally rotatable plate adapted for the workpiece to be deburred to be mounted thereon, which plate may also comprise means for mounting the workpiece. In an embodiment, the support on which the robot is positioned is located on a sliding track. The station is adapted in particular for machining forged or cast parts weighing more than 100 kg.

Patent US 20070185610 discloses a device for knocking out casts from a casting wheel for use in particular in the field of metallurgy comprising a casting wheel and a robotic arm having at least 4 degrees of freedom, provided with a gripping mechanism and a visual control system.

Patent EP1905537 discloses a workstation for machining parts, in particular cast iron or aluminium casts and the like comprising at least one work area, accommodating at least one articulated robotic arm equipped with grippers for holding the part to be machined in position and a plurality of manipulators equipped with tools for machining said part. The workstation is separated from its surroundings by a preferably soundproof chamber, where a rotatable base is provided at one of the walls of the chamber to allow the insertion of pallets supporting the workpieces P into the work area and the removal of said pallets with the parts once the machining is completed.

The object of the invention is a machining chuck for a measuring and machining station, adapted for positioning and mounting of pieces in the robotic device and for compensating vibrations that the piece would be subjected to during machining which allows for increasing the precision of positioning of the piece and the accuracy of reading data on the position of the piece during machining, by using mounting means of the chuck having specific fixed characteristics to be taken into account in the process of modelling the course of piece vibrations during machining and in the process of diagnosing the condition of the piece and designing the further course of the machining process. The chuck is adapted to be mounted on a boom for easier mounting and dismounting of the piece in the chuck and manipulating the chuck by the operator in the work field. The chuck is particularly adapted for the diagnosis and machining of pieces having a cylindrical or similar shape, such as car rims, engine housings, bearing housings, and gear wheels.

The machining chuck for a measuring and machining station, especially for metal casts according to the invention has a tabletop with two clamping mechanisms arranged laterally and opposingly that form a two-jaw mechanism, each having a retaining means with an extensible mandrel and a drive mechanism, and at the free end of each mandrel a front jaw having a profile matching the profile of the outer wall of the cast to be positioned, wherein at least one clamping mechanism has a front ball means with a socket outgoing in the wall of the front jaw.

In a variant of the solution, the machining chuck according to the invention has at the free end of the mandrel of the at least one clamping mechanism a side jaw with a side ball means with a socket outgoing in the wall of the side jaw. In this variant, the invention is designed to use auxiliary retaining surfaces of the piece, e.g. machined cylindrical or longitudinal holes, when the main retaining surface remains the larger plane of the workpiece.

The ball means according to the solution consist of a body and a ball with a diameter of 8 to 12 mm, made of steel, and a spring having a force of minimum initial N1 = 40 and final N2 = 70, and maximum initial N1 = 60 and final N2 = 130, expressed in Newtons. The purpose of these means is to generate a force allowing for the workpiece to be moved against the intended stop surfaces; once the chuck is locked, the side and front means position the workpiece as needed, reducing positioning inaccuracies. Said means may also be used by the diagnostic equipment as auxiliary machining bases, in particular control bases, against which the progress of machining the product will be determined.

In a variant of the solution, the machining chuck according to any of the above variants has two pairs of support means arranged laterally to the tabletop, juxtapositionally for the clamping mechanisms opposingly, each of which comprises a support pin and matching pressure clamps, each comprising a column, a pivot arm and a pressure pin positioned in the working position coaxially with the support pin. In a variant of the solution, the support pins or pressure pins may have convex heads.

In another variant of the solution, the machining chuck according to any of the above variants has additional support means arranged laterally to the tabletop and juxtapositionally for the pairs of support means and the matching pressure clamps, each of which comprises a support pin.

In another variant of the solution, the machining chuck according to any of the above variants has a retaining post arranged laterally to the tabletop and juxtapositionally for the pressure clamps, which serves to retain the piece in the position required for clamping the jaws on the piece.

In yet another variant of the solution, the machining chuck according to any of the above variants has at least one hand grip on the side of the tabletop for easier handling of the chuck by the operator of the robotic device in the work field.

The object of the invention is shown in embodiments in the accompanying drawing, wherein the individual figures represent:

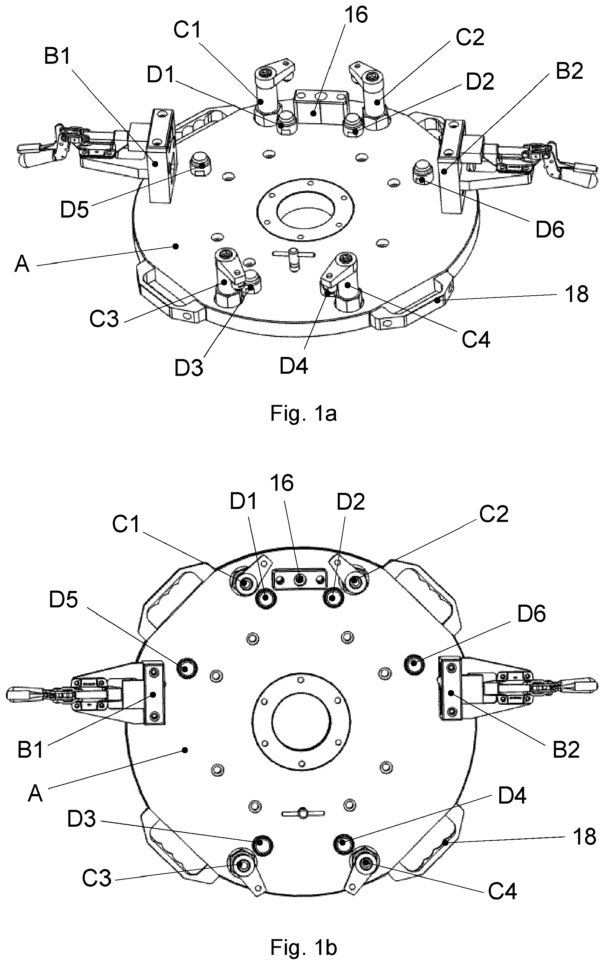

- Fig. 1a: is an overview of the chuck according to the invention
- Fig. 1b: is a top view of the chuck according to the invention

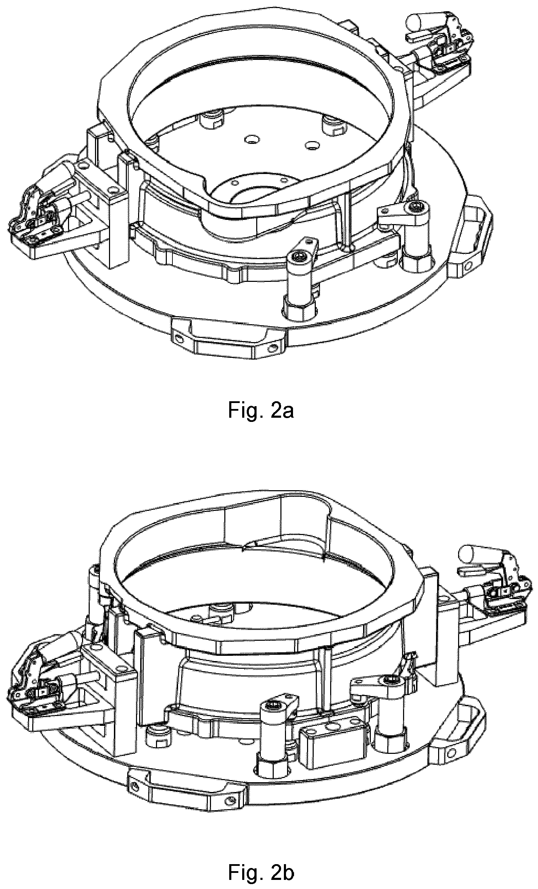

- Fig. 2a: is a first side view of the chuck according to the invention with attached motor housing cast
- Fig. 2b: is a first side view of the chuck according to the invention with attached motor housing cast

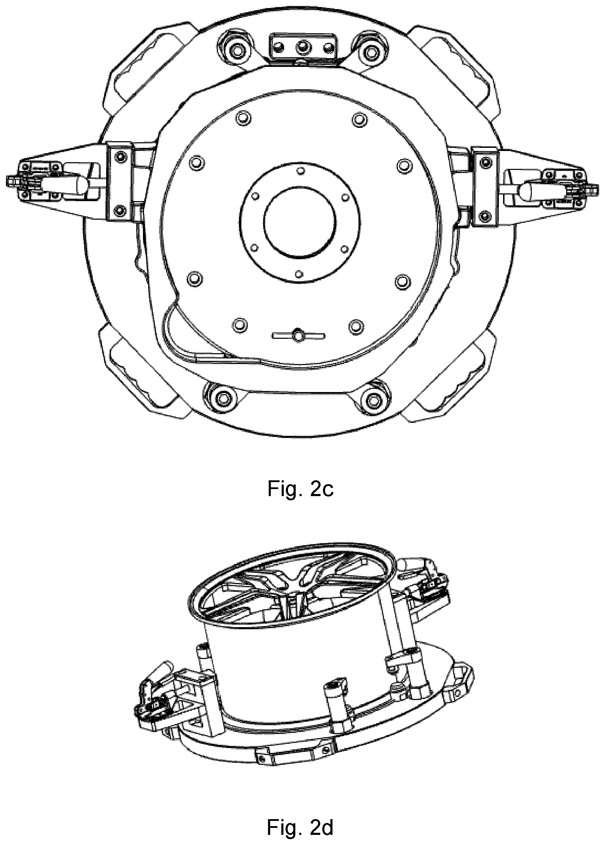

- Fig. 2c: is a top view of the chuck according to the invention with attached motor housing cast
- Fig. 2d: chuck according to the invention with attached car rim cast

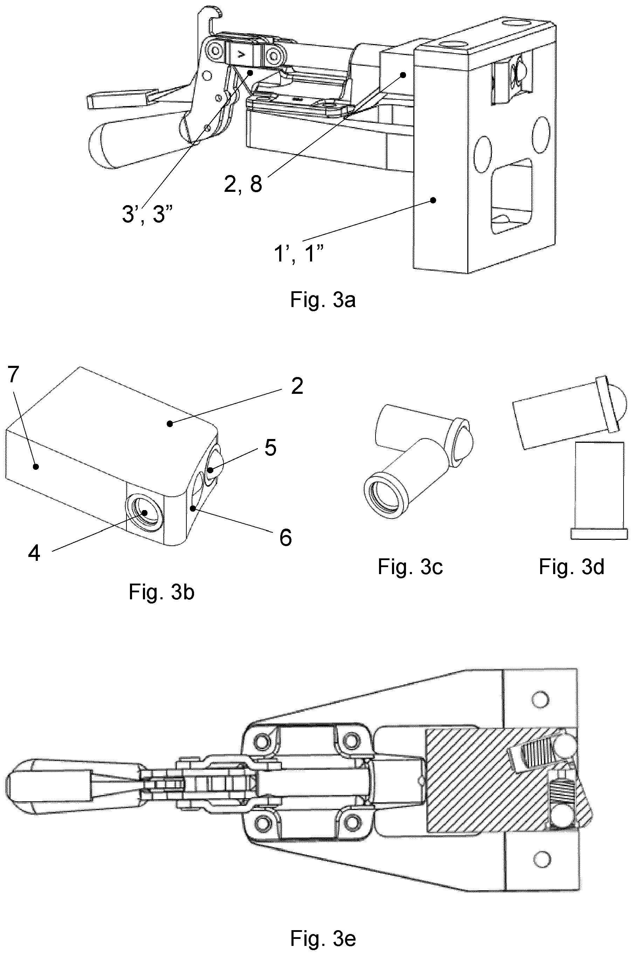

- Fig. 3a: overview of the retaining means
- Fig. 3b: mandrel with front and side jaws B1
- Fig. 3c: front and side ball means B1
- Fig. 3d: front and side ball means B1
- Fig. 3e: clamping mechanism with horizontal cross-section of the central part shown

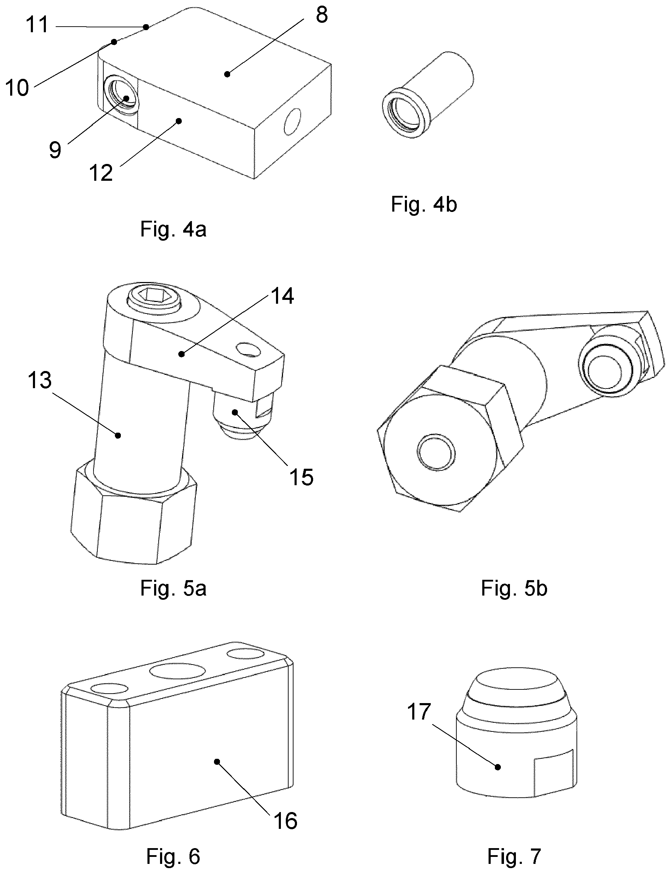

- Fig. 4a: mandrel with front and side jaws B2
- Fig. 4b: side ball means B2
- Fig. 5a: first view of the pressure clamp
- Fig. 5b: second view of the pressure clamp
- Fig. 6: retaining post
- Fig. 7: support pin

In an embodiment of the solution according to the invention, the machining chuck of a measuring and machining station especially for metal casts has a tabletop A with two clamping mechanisms B1, B2 arranged laterally to the tabletop A and opposingly, each of which has a retaining means 1', 1" with an extensible mandrel 2, 8 and a drive mechanism 3', 3", and at the free end of each mandrel 2, 8 a front jaw 6, 11 having a profile corresponding to the profile of the outer wall of the cast to be positioned and both clamping mechanisms B1, B2 having each a front ball means 5, 10 with a socket outgoing in the wall of the front jaw 6, 11. The free ends of the mandrels 2, 8 of both clamping mechanisms B1, B2 each have a side jaw 7, 12 with a side ball means 4, 9 with a socket outgoing in the wall of the side jaw 7, 12. The chuck has two pairs of support means D1, D2, D3, D4 arranged laterally to the tabletop A, juxtapositionally for the clamping mechanisms B1, B2, each of which comprises a support pin 17, and matching pressure clamps C1, C2, C3, C4, each of which comprises a column 13, a pivot arm 14 and a pressure pin 15 retained in the working position coaxially with the support pin 17. The chuck further comprises additional support means D5, D6, each comprising a support pin 17, arranged laterally to the tabletop A and juxtapositionally for the pairs of support means D1, D2, D3, D4 and matching pressure clamps C1, C2, C3, C4. The chuck has a retaining post 16 arranged laterally to the tabletop A and juxtapositionally for the clamping mechanisms B1, B2. The chuck has four hand grips 18 on the side of the tabletop A. The ball means of the chuck consist of a body made of steel, a ball with a diameter in mm ø and a spring with an initial pressure N1 and a final pressure N2 expressed in newtons, which can have the following values in the three variants:

| | ø (mm) | N1 (N) | N2 (N) |
|---|---|---|---|
| Variant I | 8 | 42 | 73 |
| Variant II | 10 | 54 | 100 |
| Variant III | 12 | 54 | 122 |

### List of references

- A: tabletop
- B1, B2: clamping mechanisms
- C1, C2, C3, C4: pressure clamps
- D1, D2, D3, D4, D5, D6: support means
- 1: retaining means
- 2: mandrel
- 3: drive mechanism
- 4: side ball means
- 5: front ball means
- 6: front jaw
- 7: side jaw
- 8: mandrel
- 9: side ball means
- 10: front ball means
- 11: front jaw
- 12: side jaw
- 13: column
- 14: pivot arm
- 15: pressure pin
- 16: retaining post
- 17: support pin
- 18: hand grip

## Claims

1. A machining chuck for a measuring and machining station, especially for metal casts, **characterised in that** it has a tabletop A with two clamping mechanisms B1, B2 arranged laterally relative to tabletop A and opposingly , each having a retaining means 1', 1" with an extensible mandrel 2, 8 and a drive mechanism 3', 3", , and at the free end of each mandrel 2, 8 a front jaw 6, 11 having a profile matching the profile of the outer wall of the cast, and at least one clamping mechanism B1, B2 has a front ball means 5, 10 with a socket outgoing in the wall of the front 6, 11.

2. Machining chuck according to claim 1 **characterised in that** the free end of the mandrel 2, 8 of at least one clamping mechanism B1, B2 has a side jaw 7, 12 with a side ball means 4, 9 with a socket outgoing in the wall of the side jaw 7, 12.

3. Machining chuck according to any of the claims 1 to 2, **characterised in that** it has two pairs of support means D1, D2, D3, D4 arranged laterally relative to the tabletop A, juxtapositionally for the clamping mechanisms B1, B2, opposingly, each of which comprises a support pin 17 and matching pressure clamps C1, C2, C3, C4 each of which comprises a column 13, a pivot arm 14 and a pressure pin 15 retained in the working position coaxially with the support pin 17.

4. Machining chuck according to claim 3, **characterised in that** it has additional support means D5, D6, each comprising a support pin 17, arranged laterally to the tabletop A and juxtapositionally for the pairs of support means D1, D2, D3, D4 and matching pressure clamps C1, C2, C3, C4.

5. Machining chuck according to any of the claims 1 to 4, **characterised in that** it has a retaining post 16 arranged laterally to the tabletop A and juxtapositionally for the clamping mechanisms B1, B2.

6. Machining chuck according to any of the claims 1 to 5, **characterised in that** it has at least one hand grip 18 on the side of the tabletop A.
